(19) Europäisches Patentamt
European Patent Office
Office européen des brevets

(11) Veröffentlichungsnummer: 0 400 336
A2

(12) EUROPÄISCHE PATENTANMELDUNG

(21) Anmeldenummer: 90108145.5

(22) Anmeldetag: 28.04.90

(51) Int. Cl.5: G06F 3/033

Die Bezeichnung der Erfindung wurde geändert
(Richtlinien für die Prüfung im EPA, A-III, 7.3).

(30) Priorität: 02.05.89 DE 3914499
02.05.89 DE 8903319 U

(43) Veröffentlichungstag der Anmeldung:
05.12.90 Patentblatt 90/49

(84) Benannte Vertragsstaaten:
AT BE CH DE DK ES FR GB IT LI NL SE

(71) Anmelder: Werdier, Dieter, Dr.
Jülicher Strasse 336
D-5100 Aachen(DE)

(72) Erfinder: Werdier, Dieter, Dr.
Jülicher Strasse 336
D-5100 Aachen(DE)

(74) Vertreter: Baronetzky, Klaus et al
Patentanwalte Dipl.-Ing. R. Splanemann, Dr.
B. Reitzner, Dipl.-Ing. K. Baronetzky Tal 13
D-8000 München 2(DE)

(54) Informationsein-/-ausgabevorrichtung, insbesondere für Patientendaten.

(57) Bei einem Verfahren zur Eingabe von insbesondere patientenspezifischen Eingabedaten werden die Bildinformationen in topographisch-zeitlicher Beziehung erfaßt und zur Rückmeldung hinsichtlich der Erfassung der Eingabedaten die Bildinformationen geändert. Die zur optischen Rückmeldung dienende Fläche dient zugleich als Eingabefläche für die Eingabedaten und als die Bildinformation liefernde Fläche.

EP 0 400 336 A2

Die Erfindung betrifft ein Verfahren zur Eingabe von Daten gemäß dem Oberbegriff von Anspruch 1, ein Verfahren zur Zuordnung von neuen Patientendaten gemäß dem Oberbegriff von Anspruch 6 sowie ein Eingabesystem mit optischer Rückmeldung gemäß dem Oberbegriff von Anspruch 7.

Bei derartigen Verfahren ist es bekannt, mittels eines Eingabemediums wie einer Tastatur individuumsspezifische Daten alphanumerisch, beispielsweise in Form der Texteingabe, einzugeben, wobei eine Zuordnung der einzelnen eingegebenen Daten zu dem Individuum anhand des für die Eingabe verwendeten und auf einem optischen Ausgabemedium angezeigten Datenfeldes erzeugt wird. Dies ist auch für den medizinischen Bereich bekannt.

Ferner ist eine strukturierte Eingabe über ein mechanisches Eingabemedium für eine Tastatur bekannt, wobei Bildschirmmasken in Abhängigkeit von der Ansteuerung durch ebenfalls über die Tastatur eingegebene Befehle innerhalb eines Datenbanksystems aufeinanderfolgen. Aufgrund der einzugebenden Befehle ist die Bedienung häufig nur dann möglich, wenn die Struktur des Datenbanksystems selbst bekannt ist.

Ferner ist die Auswahl von unterschiedlichen Möglichkeiten mit Hilfe eines sogenannten Lightpens oder Lichtstifts bekannt, wobei zur besseren Bedienbarkeit eines Programmsystems unterschiedliche Arbeitsvorgänge mit Hilfe des Lichtstifts ausgelöst werden können. Eine Dateneingabe ist jedoch hierbei nicht möglich, ohne zusätzlich eine Tastatur zu verwenden. Ferner sind die bekannten Programmsysteme aus ergonomischer Sicht vergleichsweise ungünstig, da neben der Vorlage, der Tastatur und dem Bildschirm zusätzlich ein Lichtstift verwendet werden muß.

Daher ist es Aufgabe der Erfindung, ein Verfahren zur Eingabe von individuumsspezifischen Daten gemäß dem Oberbegriff von Anspruch 1, ein Verfahren zur Zuordnung gemäß dem Oberbegriff von Anspruch 8 sowie ein Eingabesystem gemäß dem Oberbegriff von Anspruch 10 zu schaffen, das sicherer bedienbar ist, wobei dennoch eine variable und strukturierte Eingabe auch unter Berücksichtigung ergonomischer Gesichtspunkte möglich ist.

Diese Aufgabe wird erfindungsgemäß durch die kennzeichnenden Merkmale der Ansprüche 1, 6 bzw. 7 gelöst.

Dadurch, daß eine topographisch-zeitliche Beziehung erfaßt wird, ist es zunächst möglich, die Benutzereingabe als Eingabewert optisch zuzuordnen. An der Schnittstelle Mensch-Eingabe-Ausgabemedium erfolgt die Zuordnung zugleich und zusätzlich über eine Bildinformation. Die die Bildinformation erfassende Vorrichtung dient dann zugleich dazu, zur Rückmeldung die Bildinformation zu ändern, so daß eine Doppelverwendung der gelieferten Bildinformation unter zusätzlicher Zweitverwendung der Bildänderungsinformation vorliegt.

Besonders günstig ist die Möglichkeit der Eingabe über je sich ändernde Eingabeflächen. Damit wird pro logische Eingabeebene eine aus einer Vielzahl von zur Verfügung stehenden Bildinformationen ausgewählt, und es ist möglich, zu verhindern, daß bei verzögerter Reaktion der Bedienperson eine Fehlbedienung über mehrere Eingabeebenen bzw. Verästelungsstufen hindurch stattfindet. Hierzu sind die Bildinformationen und Eingabeflächen bevorzugt bei aufeinanderfolgenden Eingabeebenen unterschiedlich.

Die Eingabe der Daten erfolgt über die durch die unterschiedlichen Bedienerebenen gegebene Verästelung bis in den Einzelinformationsbereich hinein, wobei gegebenenfalls neben der optischen Rückmeldung über die Bildinformationen eine weitere Rückmeldung zum System hin in Form einer Bestätigungsfunktion vorgesehen sein kann.

Wenn beispielsweise patientenspezifische Daten eingegeben werden sollen, etwa im Bereich der Anamnese, wird zunächst über ein graphisches Ausgabemedium wie einen Bildschirm der menschliche Körper - und zwar in einer gegenüber dem sogenannten "Gelenkmännchen" übersichtlicheren Weise - dargestellt, wobei die gezielt anzusprechenden Körperbereiche über die Vorrichtung angesteuert werden. In einer ersten Ausführungsform wird lediglich einer der möglichen Körperbereiche angesteuert, wobei die optische Rückmeldung dadurch erfolgt, daß die Bildinformationen zu dem betroffenen, angesteuerten Körperbereich eingeblendet wird.

Bei der Parallelschaltung von zwei als Bildschirmen ausgebildeten graphischen Ausgabemedien läßt sich ein an einem Schwenkarm aufgehängtes Eingabesystem unmittelbar am Ort des Geschehens, beispielsweise an einer Behandlungsliege eines Arztes, nutzen, während ein weiteres, in einem Schreibtisch versenkbar angeordnetes graphisches Ausgabemedium mit einer weiteren Vorrichtung zur Dateneingabe am Schreibtisch verwendet werden kann. Hierbei ist es besonders vorteilhaft, daß diese Art der Dateneingabe sich besonders für die Parallelschaltung eignet, denn wenn zwei Tastaturen als mechanische Eingabemedien verwendet würden, müßte ein Multitasking nach der Art eines Terminalanschlusses oder zumindest einer Interrupt-Steuerung auf dem Rechner ablaufen, während hierbei die Ansteuerung ohne weitere schaltungstechnische Maßnahmen einfach durch Parallelschaltung der graphischen Ausgabemedien und der als graphische Eingabemedien ausgebildeten Vorrichtungen möglich ist. Bereits bei dieser Verschaltung ist dann eine wahlweise Eingabe auf beiden Systemen möglich.

Als Alternative hierzu ist es möglich, auf dem im Sichtbereich des Patienten liegenden graphischen Ausgabemedium lediglich die Daten darzustellen, deren Geheimhaltung gegenüber dem Patienten nicht erforderlich ist, während die anonymisierten Daten auf dem anderen graphischen Ausgabemedium dargestellt werden, das jedoch aufgrund der liegenden Position vom Patienten nicht eingesehen werden kann.

Besonders günstig ist die Überführung des graphischen Ausgabemediums in mindestens zwei verschiedene Stellungen. Während für die Eingabe über die als Lichtstift ausgebildete Vorrichtung eine nahezu horizontale, etwa 10° nach vorne geneigte Anordnung des graphischen Ausgabemediums aus ergonomischer Sicht am günstigsten ist, kann durch ein entsprechendes Verschwenken das graphische Ausgabemedium auch in eine steilere Stellung mit einem Winkel von ca. 75° gegenüber der Horizontalen gebracht werden, die für die Dateneingabe in der Sitzposition am günstigsten ist und zudem ein vom Patienteneinblick geschütztes Arbeiten erlaubt.

Besonders vorteilhaft ist ferner, daß mit dem Verschwenken zugleich ein Versenken des graphischen Ausgabemediums möglich ist, wobei bei Verwendung eines sogenannten flachen Bildschirms eine Arbeitsfläche durch das und/oder oberhalb des graphischen Ausgabemediums erzeugbar ist.

Besonders günstig ist die Verwendung des in der Dämpfungs-/Federcharakteristik abgestimmten Arbeitstisches mit dem erfindungsgemäßen Eingabesystem. Es hat sich nämlich gezeigt, daß Mikroschwingungen - möglicherweise aufgrund des Doppler-Effekts - zu Irritationen bei der Dateneingabe mit dem Lichtstift führen können. Indem die Dämpfungsvorrichtungen auch das - nahezu unvermeidliche - Restspiel der erforderlichen Verstelleinrichtungen abdecken, und zudem in sämtliche mögliche Schwingungsrichtungen wirken, werden die Schwingungen auch beim etwaigen Anstoßen auf das Minumum reduziert.

Besonders günstig ist hierbei die asymmetrische Anordnung des Fußes des Tisches - etwa links hinten. Hierdurch läßt sich die Höhenverstelleinrichtung mit einfachen und eleganten Mitteln realisieren, wobei dennoch die geforderte Schwingungsminimierung möglich ist. Das Trägheitsmoment wirkt hierdurch um eine vergleichsweise große Achse, so daß die Resonanzfrequenz vergleichsweise tief ist. Überraschend lassen sich die hiermit induzierbaren Schwingungen mit den erfindungsgemäßen Dämpfungsvorrichtungen besonders einfach ausschalten.

Weitere Einzelheiten, Vorteile und Merkmale ergeben sich aus der nachfolgenden Beschreibung mehrere Auführungsbeispiele der Erfindung anhand der Zeichnung.

Es zeigen:

Fig. 1 eine Seitenansicht einer Ausführungsform eines erfindungsgemäßen Eingabesystems in schematisierter Darstellung, wobei das graphische Ausgabemedium teilversenkt ist;

Fig. 2 das Eingabesystem gemäß Fig. 1 mit aufrechter Stellung des graphischen Ausgabemediums;

Fig. 3 eine Vorderansicht des Ausführungsbeispiels gemäß Fig. 1; und in liegender Stellung des graphischen Ausgabemediums;

Fig. 4 eine perspektivische Ansicht einer Ausführungform eines zusätzlichen, parallel geschalteten graphischen Ausgabemediums zu einem erfindungsgemäßen Eingabesystem.

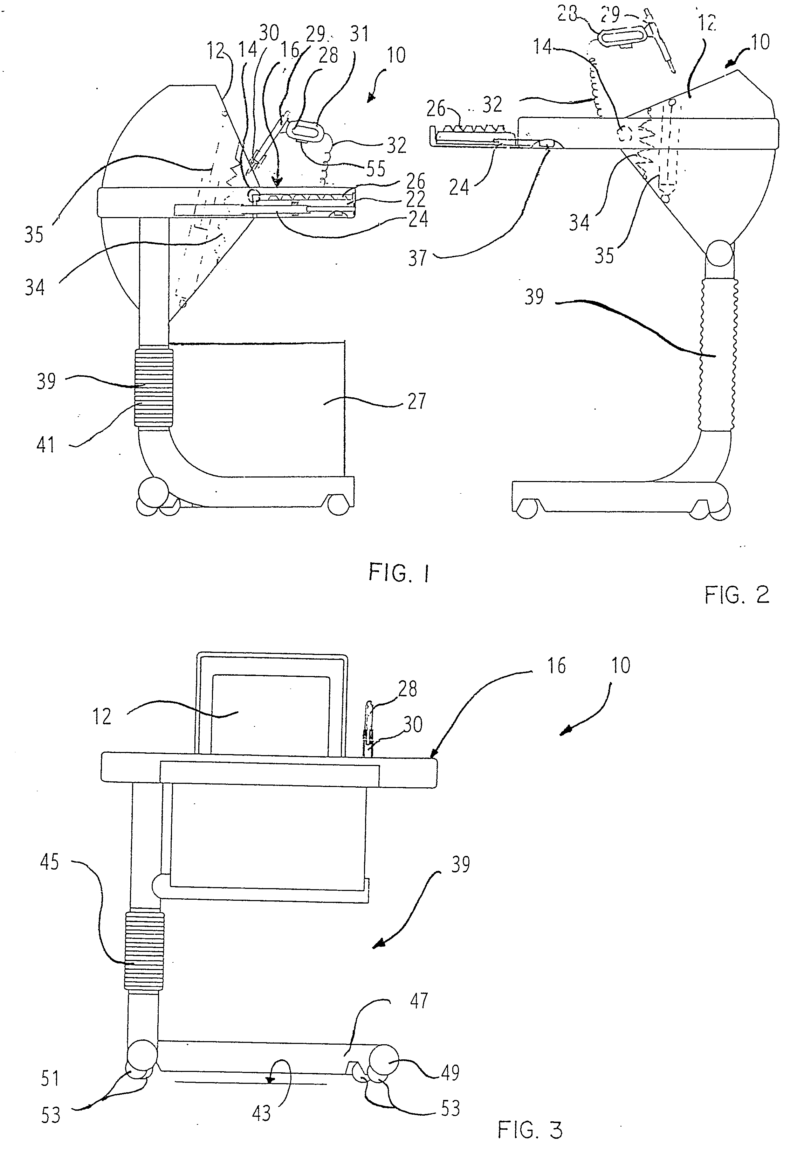

In Fig. 1 ist ein Tisch 10 mit einem graphischen Ausgabemedium 12 ausgerüstet dargestellt und weist ein Schwenklager 14 für das graphische Ausgabemedium auf. Das graphische Ausgabemedium ist um die Achse des Schwenklagers von einer nahezu horizontalen Stellung in eine nahezu aufrechte Stellung mit einem Winkel von 80° gegenüber der Horizontalen schwenkbar gelagert. Das Schwenklager 14 ist unterhalb einer Arbeitsfläche 16 des Tischs 10 angebracht und ist an dem graphischen Ausgabemedium 12 in der Nähe der vorderen Unterkante des als Bildschirm ausgebildeten graphischen Ausgabemediums gelagert.

In dem in Fig. 1 dargestellten Ausführungsbeispiel ist ein Einschub 22 vorgesehen, der eine teleskopartige Führung 24 für eine Tastatur 26 aufweist und zur Vorderseite des Tischs 10 hin ausziehbar ist. In der in Fig. 1 dargestellten Stellung ist die Tastatur 26 jedoch vollständig eingeschoben.

Das graphische Ausgabemedium 12 weist ferner eine die optische Bildinformation in topographisch-zeitlicher Beziehung erfassende Vorrichtung auf, die als Lichtpistole 28 ausgebildet ist. In der Stellung in Fig. 1 ist die Lichtpistole 28 in einer Aufnahme 30 gehalten und zugleich mit seiner Sensorspitze geschützt. Die Lichtpistole 28 weist im wesentlichen die Form eines Stifts 29 mit einem Handgriff 31 auf, wobei ein sehr flexibles Anschlußkabel 32 die Lichtpistole 28 mit dem graphischen Ausgabemedium 12 verbindet. Das Anschlußkabel 32 ist vorzugsweise federbelastet einziehbar gehalten.

Die Lichtpistole 28 weist eine sehr hochauflösende Anzeigeoptik auf, die hier nicht weiter dargestellt ist, sich jedoch für die Erfassung der optischen Bildinformation des graphischen Ausgabemediums in topographisch-zeitlicher Beziehung eignet.

Das graphische Ausgabemedium 12 ist zusammen mit der Vorrichtung in Form der Lichtpistole 28 an ein Datenbanksystem angeschlossen, das hier nicht dargestellt ist und vorzugsweise einen Rechner 27 mit dezentraler Intelligenz aufweist.

In Fig. 2 ist die Ausführungsform gemäß Fig. 1 in abgesenkter Stellung des graphischen Ausgabemediums dargestellt. Gleiche Bezugszeichen weisen hier wie auch in den weiteren Figuren auf gleiche oder ähnliche Teile hin. In dem in Fig. 2 dargestellten Ausführungsbeispiel ist die Tastatur 26 an der teleskopartigen Führung 24 ausgefahren, so daß zusätzlich eine manuelle Eingabe möglich ist. Die Arbeitsfläche 16 steht hierbei nach wie vor zur Verfügung.

Die Lagerung des graphischen Ausgabemediums 12 an dem Schwenklager 14 ist mit einer Feder 34 und einer Dämpfungsvorrichtung 35 ausgestattet, die das Gewicht des graphischen Ausgabemediums 12 kompensiert und ein leichtes Schwenken ermöglicht.

Wie aus Fig. 2 ferner ersichtlich ist, ist eine Auslösetaste 37 verdeckt in einer Griffmulde unterhalb der Arbeitsfläche 16 in der Nähe des vorderen Randes dieser seitlich vorgesehen. Mit dieser Auslösetaste 37 wird eine Rastvorrichtung ausgelöst, die gegen die Wirkung der Feder 34 das graphische Ausgabemedium 12 unten hält. Durch die Kombination der nicht dargestellten Rastvorrichtung mit der Feder 34 wird das Lagerspiel des Schwenklagers 14 nahezu vollständig kompensiert.

Eine entsprechende Auslösetaste befindet sich auf der gegenüberliegenden Seite, ebenfalls im vorderen Bereich der Arbeitsfläche 16 und ebenfalls versenkt. Diese Auslösetaste wirkt auf einen Fuß 39 des Tisches 10, der mit einer Lagervorrichtung 41 ausgestattet ist. Die Lagervorrichtung 41 dient der Höhenverstellbarkeit der Arbeitsfläche 16 und des graphischen Ausgabemediums 12 und weist hierzu ebenfalls eine nicht dargestellte Federvorrichtung und eine Dämpfungsvorrichtung auf, die mit einer Rastvorrichtung in entsprechender Weise - wie zuvor hinsichtlich des Schwenklagers 14 beschrieben - zusammenarbeiten.

Die beiden Lagervorrichtungen 14 und 41 mit den je zugehörigen Federvorrichtungen sind so bemessen, daß die jeweilige dort wirkendende Gewichtskraft etwas überkompensiert wird. Hierbei ist die Federkennlinie der Federvorrichtung 34 so gewählt, daß bei nahezu aufrechter Stellung des graphischen Ausgabemediums 12 die Feder 34 bereits stark entspannt ist, so daß die in dieser Position vermindert wirkende Gewichtskraft ebenfalls gerade überkompensiert wird.

Demgegenüber ist die Kennlinie der Feder der Lagervorrichtung 41 recht flach gewählt, so daß im gesamten Verstellbereich nahezu die gleiche Federkraft ausgeübt wird.

In dieser Stellung kann sowohl über die Vorrichtung in Form der Lichtpistole 28 als auch über die Tastatur 26 gearbeitet werden, wobei es sich versteht, daß bei der normalen Bedienung durch den Arzt lediglich die Lichtpistole erforderlich ist.

In der Darstellung gemäß Fig. 2 ist die Lichtpistole 28 in Arbeitsposition und kann von einer Bedienperson, beispielsweise dem Arzt, an die entsprechenden Bereiche der Bildinformationen gebracht werden, um die Eingabe vorzunehmen. Vorzugsweise ist die Lichtpistole 28 etwa 0,5 bis 10 cm über die Schirmfläche zu halten. In dieser Ausführungsform ist das graphische Ausgabemedium in im wesentlichen horizontaler Stellung dargestellt, wobei es jedoch auch möglich ist, die Eingabe bei leicht geneigter Stellung vorzunehmen. Vorzugsweise sind die für die Eingabe bzw. Ruhestellung günstigsten Stellungen des graphischen Ausgabemediums einrastbar.

Wie aus Fig. 3 ersichtlich ist, spannt der Fuß 39 eine Stützfläche 43 auf, die in etwa den Abmessungen der Arbeitsfläche 16 entspricht. Ein vertikaler Schenkel 45 ist als vergleichsweise dickes Rohr ausgebildet, das in einen horizontalen Hinterschenkel 47 übergeht. Der Hinterschenkel 47 erstreckt sich über die Breite des Tischs 10 und ist an seinem von dem Schenkel 45 abgewandten Ende nach vorne abgebogen, so daß er in einem Seitenschenkel 49 ausläuft.

Parallel zu dem Seitenschenkel 49 ist ein Seitenschenkel 51 an der Übergangsstelle zwischen dem Schenkel 45 und dem Hinterschenkel 47 stabil befestigt, so daß der Fuß 39 in seinem unteren Bereich in der Draufsicht die Form eines U aufweist.

An den 4 Eckpunkten des aufgespannten U sind je Lenkrollen 53 schwenkbar gelagert, die ein leichtes Verschieben des Tischs 10 zum Patienten hin erlauben.

In einer Abwandlung des hier dargestellten graphischen Ausgabemediums ist ein flacher Bildschirm vorgesehen, der auch in die vollständig waagerechte Lage gebracht werden kann und in dieser Position zugleich als weitere Erstreckung der Arbeitsfläche 16 nach hinten dient.

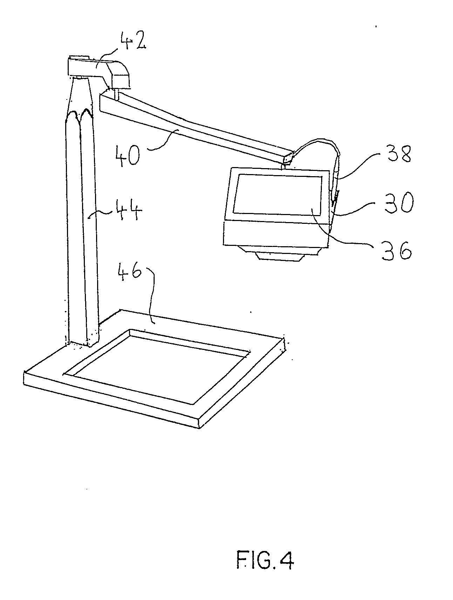

In Fig. 4 ist ein weiteres graphisches Ausgabemedium 36 dargestellt, das ebenfalls über eine Vorrichtung in Form einer Lichtpistole 38 verfügt. Das graphische Ausgabemedium 36 ist in allen Stellungen arretierbar und in jede Richtung verschwenkbar und hierzu an einem Schwenkarm 40 gelagert, der seinerseits um eine vertikale Achse drehbeweglich an einem weiteren Schwenkarm 42 gelagert ist. Der Schwenkarm 42 ist entweder schwenkbeweglich an der Wand montiert, oder es ist, wie es in Fig. 4 dargestellt ist, eine Stütze 44 vorgesehen, an der der Schwenkarm 42 drehbeweglich gelagert ist.

Die Stütze 44 weist einen ziemlich massiven Bodenteil 46 auf, der ein ausreichendes Gewicht aufweist, so daß das graphische Ausgabemedium 36 in allen Stellungen der Schwenkarme 40 und 42 eine stabile Lage hat.

In an sich bekannter Weise sind die Anschlußkabel für das graphische Ausgabemedium 36 und die Lichtpistole 38 durch die Lagerstellen der Schwenkarme 40 und 42 hindurchgeführt und an einen Rechner mit einem Datenbanksystem angeschlossen.

Diese Ausführungsform des weiteren graphischen Ausgabemediums eignet sich besonders zur Parallelschaltung mit der in den Fig. 1 bis 3 dargestellten Ausführungsform des graphischen Ausgabemediums und ist vorzugsweise im Behandlungsbereich des behandelnden Arztes angeordnet, so daß dieser beispielsweise etwa neben der Behandlungsliege stehend gleich die erforderlichen Daten eingeben kann und, ohne daß größere gedankliche Schritte erforderlich wären, bei der Eingabe sogar noch unterstützt wird.

In einer weiteren, nicht dargestellten Ausführungsform ist das graphische Ausgabemedium 12 oder das graphische Ausgabemedium 36 auf einem etwas kleineren Tisch verfahrbar, wobei in dem Tisch ein die Dateneingabe erfassender dezentraler Rechner eingebaut ist, dessen Festplatte beim Verfahren des Tischs in eine gesicherte Position gebracht wird.

Günstigerweise kann das graphische Ausgabemedium 12 als Bildschirm ausgebildet sein, der in einem vorgegebenen Zeitraster angesteuert wird. Die Lichtpistole 28 gibt dann ein positives Rückmeldesignal ab, wenn der Helligkeitswert des graphischen Ausgabemediums an der Eingabefläche einen vorgegebenen Pegel übersteigt. Das graphische Ausgabemedium ist vorzugsweise hochauflösend.

Alternativ kann das graphische Ausgabemedium auch als Plasmabildschirm ausgebildet sein. Dann ist die die optische Bildinformation des graphischen Ausgabemediums in topographischzeitlicher Beziehung erfassende Vorrichtung als eine die optische Bildinformation in topographischer Beziehung erfassende Vorrichtung ausgebildet, nämlich in Form eines Touch Panels.

Vorzugsweise ist an die Lichtpistole 28 eine Impulsauslösevorrichtung 55 vorgesehen, mit der der behandelnde Arzt einen Bildbereich anklickt, wenn die Anwahl vorgenommen werden soll. Gemäß dem erfindungsgemäßen Verfahren ist es möglich, auch Zahlenfelder auf dem Bildschirm anzuklicken, und hiermit die Eingabe je einer entsprechenden Zahl oder Ziffer zu bewirken.

Bei der Ausbildung des erfindungsgemäßen Eingabesystems gemäß Fig. 1 bis Fig. 3 kann auf der freibleibenden Arbeitsfläche 16 ein Arbeitsblatt angebracht werden, das als modularer Dokumentationsbogen für ein bestimmtes medizinisches Gebiet ausgebildet ist. Besonders günstig ist es, wenn dann die Bildinformation der Arbeitsblattinformation entspricht, so daß eine Eingabe sehr fehlersicher möglich ist.

## Ansprüche

1. Verfahren zur Eingabe von insbesondere patientenspezifischen Eingabedaten, wobei die Eingabedaten einem Datenbanksystem zugeführt werden, das die jeweilige Eingabe optisch rückmeldet, indem in Abhängigkeit von der Eingabe sich ändernde Bildinformationen abgegeben werden, dadurch gekennzeichnet, daß die die optische Rückmeldung liefernde Fläche zugleich als Eingabefläche für die Eingabedaten und als die Bildinformation liefernde Fläche verwendet wird und daß die Eingabedaten eingegeben werden, indem die Bildinformation in topographisch-zeitlicher Beziehung erfaßt wird, und daß zur Rückmeldung hinsichtlich der Erfassung der Eingabedaten die Bildinformation geändert wird.

2. Verfahren nach Anspruch 1, dadurch gekennzeichnet, daß die zur Rückmeldung abgegebenen Bildinformationen in einer Baumstruktur derart ausgegeben werden, daß, wenn die entsprechende Eingabefläche angewählt wird, eine Bildinformation abgegeben wird, die der nächsten Verästelungsstufe entspricht.

3. Verfahren nach einem der vorhergehenden Ansprüche, dadurch gekennzeichnet, daß als Bildinformation eine hochauflösend dargestellte grafische Information verwendet wird, die mindestens auch mit Helligkeitsunterschieden auf einem grafischen Ausgabemedium, insbesondere einer neigungsverstellbaren Kathodenstrahlröhre, dargestellt wird, und daß Bildbereiche mit größerer Helligkeit als Eingabeflächen verwendet werden, wobei pro Verästelungsstufe mindestens zwei Eingabeflächen auf dem grafischen Ausgabemedium anwählbar sind, von denen eine angewählt wird.

4. Verfahren nach einem der vorhergehenden Ansprüche, dadurch gekennzeichnet, daß die Bildinformationen als an den gewünschten Applikationsbereich anpaßbare Grafikinformationen in dem Datenbanksystem je einfach abgespeichert werden und die Eingabedaten für alle zu erfassenden Individuen, insbesondere Patienten, je separat abgespeichert werden.

5. Verfahren nach einem der vorhergehenden Ansprüche, dadurch gekennzeichnet, daß nur ein anonymisierter Teil der patientenspezifischen Eingabedaten auf dem grafischen Ausgabemedium angezeigt wird, insbesondere nur die Anamnese- und Befunddaten.

6. Verfahren zur Zuordnung von neuen Patientendaten zu vorhandenen Daten, bei dem die vorhandenen Daten vor dem Patienten geheimgehalten werden und neue Patientendaten getrennt von den vorhandenen Daten von einem Arzt und/oder einer Arzthilfskraft einzugeben sind, dadurch gekennzeichnet, daß ein graphisches Eingabemedium wie ein Lichtstift verwendet wird, um korrespondierend zu einem graphischen Ausgabemedium wie einem Bildschirm, insbesondere einer Kathodenstrahlröhre, eine baumförmige hierarchische Eingabestruktur zu durchlaufen, und beim Erreichen eines gewünschten aus einer vorgegebenen Auswahl von Daten eine Datenübertragung der neuen Patientendaten zu den vorhandenen veranlaßt wird.

7. Eingabesystem mit optischer Rückmeldung, wobei eine Eingabefläche sich in Abhängigkeit von einem angewählten Bereich ändernde Bildinformationen liefert, dadurch gekennzeichnet, daß die Eingabe über eine die Bildinformation (28) eines graphischen Ausgabemediums (12) in topografisch-zeitlicher Beziehung erfassende Vorrichtung (28) erfolgt, die zur Rückmeldung die Bildinformation ändert.

8. Eingabesystem nach Anspruch 7, dadurch gekennzeichnet, daß das grafische Ausgabemedium (42) in einem vorgegebenen Zeitraster ansteuerbar ist, wobei die die optische Rückmeldung bzw. Bildinformation erfassende Vorrichtung ein positives Rückmeldesignal abgibt, wenn der Helligkeitswert des grafischen Ausgabemediums (12) an der Eingabefläche einen vorgegebenen Pegel übersteigt.

9. Eingabesystem nach Anspruch 7 oder 8, dadurch gekennzeichnet, daß das grafische Ausgabemedium hochauflösend, beispielsweise mit einer Auflösung von 720 x 348 Bildpunkten, insbesondere als Plasmabildschirm, ausgebildet ist und daß die die optische Rückmeldung bzw. Bildinformation erfassende Vorrichtung als lichtempfindlicher Lichtstift (28) ausgebildet ist.

10. Eingabesystem nach einem der Ansprüche 7 bis 9, dadurch gekennzeichnet, daß die die optische Rückmeldung bzw. Bildinformation erfassende Vorrichtung (28) eine Impulsauslösevorrichtung aufweist, mit welcher in zeitlicher und auf die Bildkoordinaten bezogener Abstimmung die Anwahl des angewählten Bereichs durchführbar ist.

11. Eingabesystem nach einem der Ansprüche 7 bis 10, dadurch gekennzeichnet, daß die die optische Rückmeldung bzw. Bildinformation erfassende Vorrichtung (28) gegenüber dem grafischen Ausgabemedium (12) beweglich ist und einen Eingangsbereich aufweist, der eine Auslösung der Eingabedaten auch in von dem grafischen Ausgabemedium (12) beabstandetem Zustand erlaubt.

12. Eingabesystem nach einem der Ansprüche 7 bis 11, dadurch gekennzeichnet, daß das grafische Ausgabemedium (12) an einem Schwenklager (14) gelagert ist und in einen höhenverstellbaren Tisch (10), insbesondere einen Behandlungstisch, zumindest teilversenkbar integriert ist.

13. Eingabesystem nach einem der Ansprüche 7 bis 12, dadurch gekennzeichnet, daß ein weiteres grafisches Ausgabemedium (36) parallel zu dem grafischen Ausgabemedium (12) geschaltet ist und daß eine weitere, die Bildinformation des weiteren grafischen Ausgabemediums erfassende Vorrichtung (38) parallel zu der die Bildinformation erfassenden Vorrichtung (28) geschaltet ist.

14. Eingabesystem nach einem der Ansprüche 7 bis 13, dadurch gekennzeichnet, daß das graphische Ausgabemedium (12) in seinem Neigungswinkel federbelastet verstellbar ist und zugleich eine Arbeitsfläche (16) des Tischs (10) zusammen mit dem Ausgabemedium (12) höhenverstellbar gelagert ist, wobei auch die Lagerung der Arbeitsfläche (16) eine Federvorbelastung aufweist.

15. Eingabesystem nach Anspruch 14, dadurch gekennzeichnet, daß Verstellvorrichtungen für die Neigung des grafischen Ausgabemediums (12) und für die Höhe der Arbeitsfläche (16) und des Ausgabemediums (12) je eine Bewegungsdämpfungsvorrichtung aufweisen, deren Dämpfungscharakteristik auf die bewegte Masse im Verhältnis zu der Federkraft jeder Verstellvorrichtung abgestimmt ist.

16. Eingabesystem nach einem der Ansprüche 7 bis 15, dadurch gekennzeichnet, daß der Tisch (10) einen asymmetrisch angeordneten Fuß (39) aufweist, in welchen die Verstellvorrichtungen für die Höhe der Arbeitsfläche (16), einschließlich einer Dämpfungsvorrichtung, eingebaut ist, und der torsions-und biegesteif ausgebildet ist und insbesondere einen vertikalen Schenkel (45) und zwei eine Ebene entsprechend der Arbeitsfläche aufspannende waagerechte Schenkel (49,51) aufweist.

FIG. 1

FIG. 2

FIG. 3

FIG.4